# EUROPEAN PATENT APPLICATION

(11) **EP 4 707 432 A1**
(43) Date of publication of application: **11.03.2026**
(21) Application number: 24198951.6
(22) Date of filing: 06.09.2024
(51) Int. Cl.: C25B 1/044, C25B 15/08

(54) **ELECTROLYSIS ARRANGEMENT**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Choudar, Yann, 60388 Frankfurt am Main (DE); Jallais, Simon, 78354 Les Loges en Josas (FR); Nesselberger, Markus, 60439 Frankfurt am Main (DE); Tadiello, Jean-Philippe, 60439 Frankfurt am Main (DE); Widuch, Dennis, 60439 Frankfurt am Main (DE)
(74) Representative: Air Liquide

(57) **Abstract**

The invention relates to an electrolysis arrangement comprising an electrolyzer for performing the electrolysis of an electrolyte, wherein a biphasic flow containing a gas flow and a liquid electrolyte flow is produced in the electrolyzer, and a separator downstream of the electrolyzer and comprising a vessel with a receiving chamber for receiving the biphasic flow from the electrolyzer, wherein the separator is configured to separate the gas flow and the liquid electrolyte flow in the receiving chamber. An explosion damper is arranged within the receiving chamber

## Description

### TECHNICAL FIELD

The invention relates to an electrolysis arrangement comprising an electrolyzer for performing the electrolysis of an electrolyte, wherein a biphasic flow containing a gas flow and a liquid electrolyte flow is produced in the electrolyzer, and a separator downstream of the electrolyzer and comprising a vessel with a receiving chamber for receiving the biphasic flow from the electrolyzer, wherein the separator is configured to separate the gas flow and the liquid electrolyte flow in the receiving chamber.

### BACKGROUND OF THE INVENTION

An electrolyzer is a device that uses electrical energy to drive a chemical reaction, typically the splitting of water into hydrogen and oxygen gases. This process, represented as 2H₂O → 2H₂ + O₂, is critical for various industrial applications but poses significant safety challenges due to the highly explosive nature of the gas mixture under normal conditions (20°C and atmospheric pressure).

An electrolyzer typically consists of a series of cells, each containing an anode and a cathode. In certain electrolysis processes, such as alkaline electrolysis, these electrodes are submerged in a liquid electrolyte, which contains ions and facilitates the flow of electric current through the cells. The electrical energy passing through the electrolyte causes water molecules at the electrodes to split into hydrogen and oxygen gases. During the electrolysis process, hydrogen gas is generated at the cathode and oxygen gas at the anode. The liquid electrolyte ensures continuous ion conduction between the anode and cathode, enabling the electrochemical reactions. As the gases are produced within the cells, they mix with the electrolyte, resulting in a biphasic flow consisting of both gas bubbles and liquid electrolyte exiting the cells. The term "biphasic flow" refers to the simultaneous flow of gas and liquid phases exiting the electrolyzer. This mixture must be managed carefully to ensure efficient separation and utilization of the generated gases.

The gas flow generated in the electrolyzer needs to be separated from the liquid electrolyte flow to obtain pure hydrogen and oxygen gases for various applications. The biphasic flow from the electrolyzer is directed into a separator designed to separate the gas flow from the liquid electrolyte flow. The separator typically comprises a vessel in which the lighter gas is allowed to rise and be collected separately from the denser liquid electrolyte. Its structure includes inlets for receiving the biphasic flow from the electrolyzer and outlets for discharging the separated gas flow and liquid electrolyte flow. The electrolyte may be returned to the electrolyzer.

A significant safety concern in electrolyzer systems is the potential for explosions in the separator. This risk is particularly high in the separator due to several factors. The gas mixture of hydrogen and oxygen is highly explosive within certain concentration ranges (3.8% to 95.4% hydrogen). The separator accumulates and concentrates the gas flows, especially hydrogen, which is highly flammable. If there is any leakage or mixing of gases, it can form explosive mixtures with air or oxygen. The confined space within the separator can further exacerbate the situation, leading to a risk of deflagration (a subsonic combustion wave) or detonation (a supersonic explosion). In the event of ignition, typically triggered by a spark or flame, the mixture can undergo deflagration, rapidly increasing the gas pressure within the separator. Under specific conditions (such as obstacles, pipe length, or internal turbulence), deflagration can transition into detonation (Deflagration to Detonation Transition, DDT), further escalating the explosion risk.

The current state of the art reveals a widespread lack of explosion prevention, particularly in the realm of hydrogen production. Current approaches either aim to mitigate detonations or increase design pressures to prevent containment failures. However, both strategies are imperfect since detonations can be reduced but not entirely eliminated, leaving a residual risk of catastrophic outcomes. Pressurized alkaline electrolyzers typically operate at elevated pressures, typically around 25 barg (approximately 26 bar absolute). Under specific stoichiometric conditions, detonations can increase pressures by up to a factor of 20, reaching approximately 500 barg (approximately 501 bar absolute). Developing a system capable of withstanding detonations therefore requires higher design pressures, which involve substantial costs and effort.

It is object of the invention to enhance the safety of electrolyzer systems and to reduce the risks of explosions associated with the handling and separation of gas and liquid phases during electrolysis.

### SUMMARY OF THE INVENTION

The object of the invention is solved by an electrolyzer arrangement as defined in claim 1. Further and preferred embodiments of the present invention are disclosed in the following description and in the dependent claims.

According to the invention, the electrolyzer arrangement comprises an electrolyzer for performing the electrolysis of an electrolyte, wherein a biphasic flow is generated in the electrolyzer, wherein the biphasic flow contains a gas flow and a liquid flow; and a separator, wherein the separator is arranged downstream of the electrolyzer and comprises a vessel with a receiving chamber for the biphasic flow. The separator is configured to receive the biphasic flow from the electrolyzer and to separate the gas flow and the liquid electrolyte flow in the receiving chamber. According to the invention, an explosion damper is provided in the receiving chamber. The explosion damper is characterized by an open-cell porous structure. Due to this damper design, the risk of a detonation and/or deflagration is significantly reduced. The porous cells dissipate heat rapidly through their large surface area and interconnected voids, thereby preventing flame propagation. Additionally, the porous cells absorb and dissipate pressure waves, thereby preventing a detonation shock wave, i.e., a detonation. Despite its barrier properties to flames and pressure waves, the porous structure remains permeable to gas flow, ensuring continuous gas separation and flow within the separator.

According to a further embodiment of the invention, the explosion damper includes one or more open-pored bodies.

According to a further embodiment of the invention, the explosion damper comprises an inner surface and an outer surface, wherein the inner surface is larger than the outer surface. The explosion damper comprises cavities and pores within its open-cell porous structure. The inner surface refers to the total area of the internal walls within the pores and cavities of the open-cell porous structure, which is not exposed to the outside. This inner surface area is larger due to the intricate network of pores in the open-cell porous structure, compared to the outer surface, which is the visible area of the open-cell porous structure that is directly in contact with the external environment of the open-cell porous structure. This configuration enhances its effectiveness in mitigating explosive forces within the separator vessel. The larger inner surface area allows for greater interaction with a medium, facilitating efficient heat dissipation and pressure mitigation during ignition events. By maximizing the contact area between the porous structure and the flowing gases and electrolyte, the damper optimizes its flame arrestor capabilities.

According to a further embodiment of the invention, the explosion damper is configured as a porous layer, e.g., a lining, on the inner wall or surface of the separator vessel. This arrangement is highly effective in terms of suppressing a detonation event due to its direct exposure to the biphasic flow of gas and liquid electrolyte within the vessel. By being positioned close to the source of potential ignition, the explosion damper can promptly absorb heat and reduce pressure spikes thereby effectively preventing the propagation of a detonation. Further, by applying a porous layer on the inner wall of a separator vessel, a reflection of the pressure waves is prevented. Thus, a full detonation does not occur, as the propagation of a detonation event is hindered after its initiation.

The porous layer is preferably configured as an inner lining or filling of the separator vessel. Preferably, the porous layer extends circumferentially around an axis of the separator, e.g., a horizontal axis of a horizontally oriented separator. The thickness of the lining layer is preferably least 0.2 times the inner diameter of the separator, more preferably within the range from 20% to 50% of the inner diameter of the separator. This configuration ensures robust protection and enhances the separator's ability to prevent detonations and suppress deflagrations, thereby significantly improving the safety of the electrolysis arrangement. According to a further embodiment of the invention, the explosion damper is configured as a series of flame arrestor walls arranged at a distance from each other, i.e., with a gap between adjacent flame arrestor walls, wherein the flame arrestor walls are adapted to extinguish flames through heat absorption and prevention of flame propagation, with the flame arrestor walls preferably extending transversely to the flow direction of the biphasic flow within the separator. Functionally, flame arrestor walls operate by absorbing heat from flames and preventing their spread. When a flame enters the arrestor walls, the heat is absorbed, causing a temperature drop that extinguishes the flame. The structure of a flame arrestor basically consists of a series of small channels or a fine mesh as provided in open-cell porous structures. When the flame front encounters these small passages, the surface area in contact with the flame increases significantly. This large surface area helps dissipate the heat more effectively and quickly. The flame is quenched as it cannot sustain combustion through these narrow channels due to the rapid heat loss. Thereby, the flame is prevented from traveling further within the separator vessel, thereby averting potential explosions or hazardous situations. The flame arrestor walls' placement inside the vessel ensures reliable flame suppression, contributing significantly to the safety and stability of electrolysis operations.

Generally, different sections of the explosion damper can be tailored for specific functions. One part may be configured as the afore-described inner layer, while another part can be structured as the described fire arrestor walls. This dual functionality ensures that the explosion damper can effectively prevent both, fatal detonations and deflagration, enhancing the overall safety and effectiveness of the electrolysis arrangement. Generally, the explosion damper may be composed of one or more parts. The arrangement of individual parts or sections of the explosion damper within the vessel may be based on the specific functions assigned to the parts. Individual parts of the explosion damper may be individually configured, based on the individual part's specific function, including the open-cell structure (e.g., pore size) and the choice of material.

The explosion damper may be implemented in various configurations, including mesh, foam, or sponge. Mesh typically consists of fine wires or fibers forming a uniform structure that is heat-resistant and permeable to gases. Foam materials also offer a porous structure capable of effectively absorbing heat and damping pressure waves during explosions. A sponge, made from materials like copper, provides an open-cell structure that also maximizes surface area for heat dissipation. Further, open-cell structures offer the ability for moisturizing to enhance flame quenching capabilities. Suitable materials for the explosion damper in an electrolysis arrangement include, e.g., metal foam, such as stainless steel or nickel alloys; metal mesh structures, made from materials like copper or aluminum; porous ceramic; composite materials or carbon-based structures.

According to a further embodiment of the invention, the flame arrestor walls are arranged within a space defined by the inner wall of the porous layer or inner lining, which is positioned against the inner wall of the separator vessel, i.e., the inner layer of the porous material surrounds the flame arrestor walls. Preferably, the flame arrestor walls extend transversely across the interior space of the vessel, spanning from one side of the inner wall of the inner layer to the other. This design improves the blocking and absorbing of the heat of any flames that may arise, preventing the flames from propagating. The flame arrestor walls may be evenly distributed along an axis, e.g., an axis following the flow direction of the biphasic flow, of the separator vessel.

According to a further embodiment of the invention, the open-cell porous structure of the explosion damper comprises apertures of 55 PPI to 65 PPI, preferably 60 PPI (Pores per Inch) or a pore size from 0.35 mm to 0.41 mm, preferably 0.38 mm. "PPI" is an internationally recognized unit of measurement, particularly relevant in fields like foam manufacturing, filtration technology, and materials science. It quantifies the number of pores per inch, providing a standard method to measure the porosity and structure of materials, especially foams and filter media. Using an open-cell structure within the range from 55 PPI to 65 PPI, preferably 60 PPI, aperture size significantly enhances the damper's effectiveness in reducing pressure and suppressing flames. This specific pore structure allows the explosion damper to absorb and dissipate heat even more effectively.

According to a further embodiment of the invention, the electrolyte is an alkaline metal hydroxide solution, preferably the electrolyte is an aqueous KOH solution. The use of such an electrolyte has proven advantageous due to its additional fire suppressant properties. This in particular accounts for the explosion damper whose flame arrestor walls may be continuously moistened with the electrolyte.

According to a further embodiment of the invention, the explosion damper, in particular one or both of the inner layer and the flame arrestors walls, are capable of capillary action, e.g., by specifying a pore size that enables capillary action. By designing the explosion damper to utilize capillary action, liquid fire suppressant may be drawn up into the material of the explosion damper, significantly enhancing the flame quenching capabilities of the explosion damper. By absorbing heat and maintaining a wetted surface, specifically the flame arrestor walls can more effectively extinguish flames and prevent flame propagation within the separator vessel. This dual functionality-heat absorption and capillary-induced moistening-ensures improved safety and operational reliability of the electrolysis arrangement by mitigating the risk and impact of explosions.

According to a further embodiment of the invention, the explosion damper comprises cavities and pores within the open-cell porous structure, wherein the open-cell porous structure comprises a porosity from 25% to 35%, preferably from 28% to 32%, wherein the porosity is defined as the ratio of the total volume of the cavities and pores to the overall volume of the open-cell porous structure. This porosity level determines a very effective openness of the structure, allowing gases to flow through while effectively attenuating detonations and suppressing flames. The suggested porosity range ensures optimal performance in maintaining safe operational conditions within the electrolyzer system, balancing between gas flow dynamics and safety considerations.

According to another embodiment, the explosion damper consists of multiple sections with distinct functions. At least one section is configured as a detonation attenuator along the inner side wall of the vessel, e.g., by providing the above-described inner layer, while at least one other section is configured as a fire arrestor wall. Preferably, the first section surrounds the second section.

These sections may be integrally formed, emphasizing their seamless integration and functional integrity within the electrolysis arrangement. This ensures that different aspects of explosion mitigation-such as reducing detonation impacts and suppressing flames-are effectively addressed by specific components within a single explosion damper, thereby enhancing overall safety and operational reliability.

The inner layer may be configured as a tube that is placed against the inner wall of a similarly tubular separator vessel. The flame arrestor walls may act as partitions within the inner layer and divide the inner lining into multiple sections. Preferably, the distances between the flame arrestor walls are kept constant. This design ensures that the inner space of the vessel is effectively compartmentalized, optimizing the distribution and effectiveness of the flame arrestor walls. By maintaining consistent separations, the arrangement enhances the overall stability and safety of the electrolysis system, particularly in mitigating the risks associated with explosions and flame propagation.

### BRIEF DESCRIPTION OF THE FIGURES

The invention will now be described referring to exemplary embodiments shown in the figures in which:
FIG. 1 is a schematic representation of an electrolysis arrangement;
FIG. 2 is a side sectional view of a separator of an electrolysis arrangement according to a first embodiment of the invention;
FIG. 3 is a side sectional view of a separator of an electrolysis arrangement according to a further embodiment of the invention;
FIG. 4 is a perspective view of a separator of an electrolysis arrangement according to a further embodiment of the invention; and
FIG. 5 shows the separator of FIG. 4 in a cross-sectional perspective view and a cross-sectional side view.

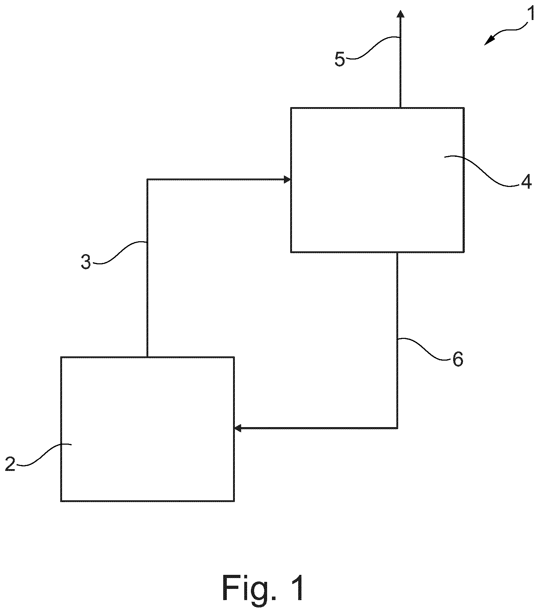

**FIG. 1** shows schematically an electrolysis arrangement 1 comprising an electrolyzer 2 in which a series of cells, each containing an anode and a cathode is submerged in an electrolyte. Within these cells, electrical energy is transmitted through the anode and cathode and passes through the electrolyte and causes water molecules to split into hydrogen and oxygen gases at the electrodes. As the gases are produced, they mix with the electrolyte, resulting in a biphasic flow 3 consisting of both gas bubbles and liquid electrolyte exiting the cells. The biphasic flow 3 is directed into a separator 4 to separate the gas flow 5 from the liquid electrolyte flow 6. The separator 4 comprises a vessel that allows the lighter gas to rise and be collected separately from the denser liquid electrolyte. The gas flow 5 is directed out of the separator 4, while the electrolyte 6 is discharged from another outlet of the separator 4 and recirculated back into the electrolyzer 2.

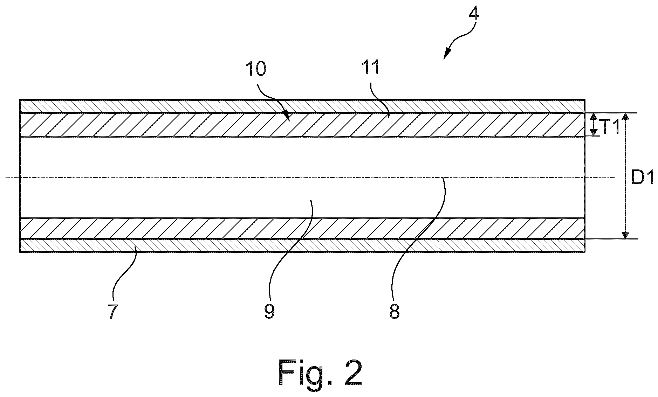

**FIG. 2** shows a separator 4 comprising a vessel 7 in the form of a cylindrical tubular body. The separator 4 extends along a cylinder axis 8 along and around which the cylindrical vessel 7 extends. The interior of the vessel 7 provides a receiving chamber 9 in which the biphasic flow 3 (FIG. 1) from the electrolyzer is received.

Inside the vessel 7, an explosion damper 10 is arranged. The explosion damper 10 is provided in the form of a tube accommodated within the cylindrical vessel 7 and forms a layer 11 on the inner surface or wall of the vessel 7. The explosion damper 10 extends along and around the axis 8 and is made of metallic foam with a gas-permeable open-cell porous structure with a porosity of around 30%. The porous layer 11 has a thickness T1 that is about 20% of the inner diameter D1 of the vessel 7.

The explosion damper 10 shown in the exemplary embodiment is configured as a detonation attenuator, which prevents a detonation. A detonation consists essentially of a deflagration with a shock wave. In the case of an explosion resulting from an ignition of the gas, e.g., the hydrogen gas, inside the receiving chamber 9, the transverse shock wave is mitigated by the porous structure of the explosion damper 10. Further, the porous layer 11 prevents a reflection of the shock wave. Thus, a full detonation does not occur, as the propagation of such a detonation is hindered after its initiation. Fatal detonations are effectively prevented.

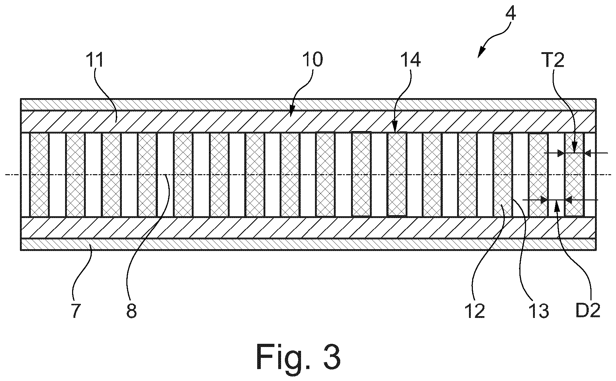

**FIG. 3** shows a further embodiment of a separator 4 equipped with an explosion damper 10 that includes a detonation attenuator as explained with reference to FIG. 2 in the form of a porous layer 11 on the inner wall surface of the separator vessel 7 and that further includes a series of fire arrestor walls 12 arranged with a gap of distance D2 between adjacent fire arrestor walls 12. The fire arrestor walls 12 each have a thickness T2 in the direction of axis 8 and a main surface area 13 that is oriented transverse to the axis 8 of the vessel 7. The flame arrestor walls 12 are arranged within a space 14 defined by an inner wall of the porous layer 11. The fire arrestor walls 12 and the inner layer 11 are both made of an open-cell porous structure that is gas-permeable. This allows the biphasic flow to pass through the fire arrestor walls 12. Further, if the gas flow inside the vessel 7 ignites, the open-pored structure of the fire arrestor walls 12 absorbs the heat from the flames and prevents their spread. The porous structure physically obstructs the flame front, preventing it from propagating through the arrestor. The size of the passages provided by the pores is smaller than the quenching distance of the flame, which is the minimum distance required for the flame to continue burning. By providing a barrier with passages smaller than this critical distance, the flame is effectively stopped.

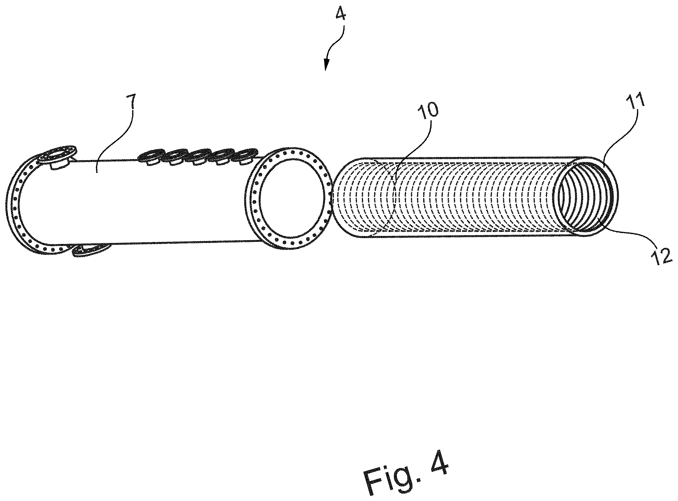

In the embodiment shown in FIG. 3, the fire arrestor walls 12 and the inner layer 11 of the explosion damper 10 are separate components. However, it is possible to form the walls and the layer integrally, i.e. to provide them as a single body, as shown in FIG. 4.

**FIG. 4** shows an embodiment of the explosion damper 10 that is provided as a one-piece body. The explosion damper 10 is provided in the form of a tube and provides sections with specific functionalities, namely the inner layer 11 shown in FIG. 3, which serves as a detonation attenuator, and the flame arrestor walls 12, which extend between the inner layer 11 in the form of partition walls. This one-piece construction of an explosion damper can be easily inserted into and placed within the vessel 7 of the separator 4. The flame arrestor walls 12 and the inner layer 11 are made of the same open-cell porous material.

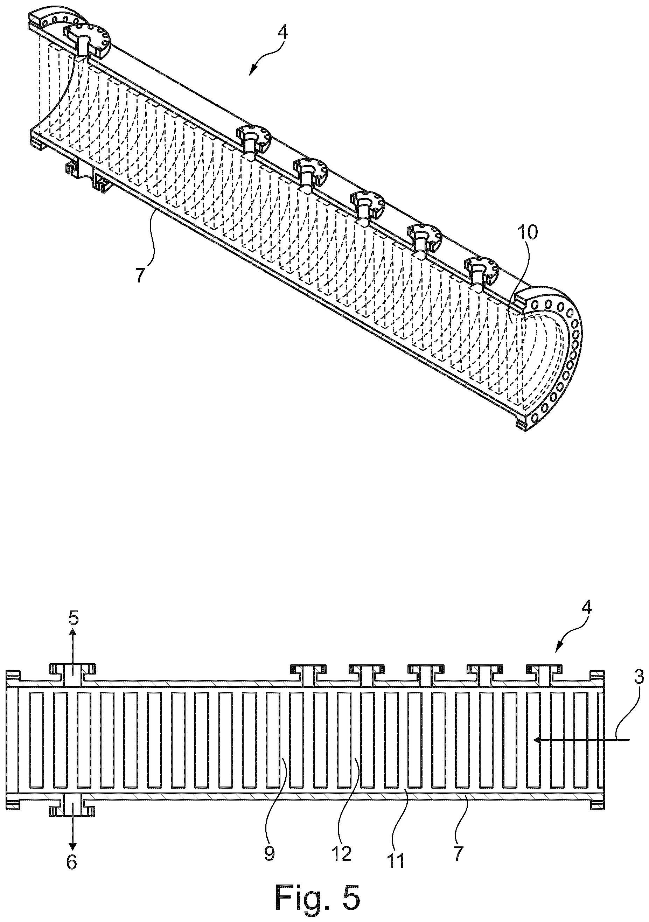

**FIG. 5** shows in a cross-sectional perspective view and in a cross-sectional side view the accommodation of the explosion damper of FIG. 4 inside the vessel 7 of the separator 4. The biphasic flow 3 is received within the receiving chamber where the gas is separated from the electrolyzer. The vessel 7 has an upper outlet for the gas flow 5 separated from the electrolyzer 6, whose outlet is located on the lower side of the vessel 7. Inside the vessel 7, the fire arrestor walls 12 are arranged transverse to the biphasic flow 3. Further, separator is filled with highly concentrated potassium hydroxide solution which has good flame quenching properties. Due to the porous structure of the fire arrestor walls 12, the fire arrestor walls 12 are capable of capillary action, the potassium hydroxide solution may be drawn up into the material of the fire arrestor to moisten the explosion damper 10 and to act as liquid fire suppressant.

### Reference numerals

- 1: electrolysis arrangement
- 2: electrolyzer
- 3: biphasic flow
- 4: separator
- 5: gas flow
- 6: electrolyte
- 7: vessel
- 8: cylinder axis
- 9: receiving chamber
- 10: explosion damper
- 11: porous layer
- 12: fire arrestor walls
- 13: main surface area
- 14: inner space

## Claims

1. Electrolysis arrangement (1), comprising:
an electrolyzer (2) for performing the electrolysis of an electrolyte, wherein a biphasic flow (3) containing a gas flow (5) and a liquid electrolyte flow (6) is produced in the electrolyzer (2);
a separator (4), wherein the separator (4) is arranged downstream of the electrolyzer (2) and comprises a vessel (7) with a receiving chamber (9) for receiving the biphasic flow (3) from the electrolyzer (2), wherein the separator (4) is configured to separate the gas flow (5) and the liquid electrolyte flow (6) in the receiving chamber (9),
wherein the receiving chamber (9) includes an explosion damper (10) adapted to prevent and/or mitigate explosions resulting from an ignition of the gas flow (5) within the separator (4), wherein the explosion damper (10) is permeable to gas and comprises an open-cell porous structure.

2. Electrolysis arrangement (1) according to claim 1, wherein the explosion damper (10) includes one or more open-pored bodies, in particular with a foam, mesh or sponge structure.

3. Electrolysis arrangement (1) according to claim 1 or claim 2, wherein the explosion damper (10) comprises an inner surface and an outer surface, wherein the inner surface is larger than the outer surface.

4. Electrolysis arrangement (1) according to any of the preceding claims, wherein the explosion damper (10) is configured as a porous layer (11) on the inner wall of the separator vessel (7).

5. Electrolysis arrangement (1) according to any of the preceding claims, wherein the explosion damper (10) is configured as a series of flame arrestor walls (12) arranged at a distance from each other and adapted to extinguish flames through heat absorption and prevention of flame propagation, with the flame arrestor walls (12) preferably extending transversely to the flow direction of the biphasic flow (3) within the separator (4).

6. Electrolysis arrangement (1) according to claims 4 and 5, wherein the flame arrestor walls (12) are arranged within a space (14) defined by an inner wall of the porous layer (11).

7. Electrolysis arrangement (1) according to any of the preceding claims, wherein the open-cell porous structure comprises apertures from 55 PPI to 65 PPI, preferably 60 PPI (Pores per Inch) or a pore size from 0.35 mm to 0.41 mm, preferably 0.38 mm.

8. Electrolysis arrangement (1) according to any of the preceding claims, wherein the electrolyte is an alkaline metal hydroxide solution, preferably, the electrolyte is an aqueous KOH solution.

9. Electrolysis arrangement (1) according to any of the preceding claims, wherein the explosion damper (10) is at least partly capable of capillary action.

10. Electrolysis arrangement (1) according to any of the preceding claims, wherein the explosion damper (10) is composed of a single body, formed integrally.

11. Electrolysis arrangement (1) according to any of the preceding claims, wherein the explosion damper (10) comprises cavities and pores within the open-cell porous structure, wherein the open-cell porous structure comprises a porosity from 25% to 35%, preferably from 28% to 32%, wherein the porosity is defined as the ratio of the total volume of the cavities and pores to the overall volume of the open-cell porous structure.

12. Electrolysis arrangement (1) according to any of the preceding claims, wherein the receiving chamber (9) defines an inner diameter (D1) of the vessel (7), wherein the inner layer (11) has a thickness (T1) that covers at least 20% of the inner diameter (D1).

13. Electrolysis arrangement (1) according to any of the preceding claims, wherein the explosion damper (10) includes multiple sections (11, 12) with distinct functions, wherein at least one first section (11) is configured as a detonation attenuator along the inner side wall of the vessel (7), while at least one second section (12) is configured as fire arrestor, wherein the first and second sections (11, 12) may be integrally formed.
